(19) Europäisches Patentamt / European Patent Office / Office européen des brevets

(11) **EP 2 140 950 B1**

## (12) EUROPEAN PATENT SPECIFICATION

(45) Date of publication and mention of the grant of the patent:
**05.11.2014 Bulletin 2014/45**

(21) Application number: **08739032.4**

(22) Date of filing: **27.03.2008**

(51) Int Cl.:
*B21B 23/00* (2006.01)  *B21B 17/14* (2006.01)
*B21C 37/15* (2006.01)  *C21D 9/08* (2006.01)
*C22C 38/00* (2006.01)  *C22C 38/32* (2006.01)
*C22C 38/58* (2006.01)  *B21B 27/02* (2006.01)

(86) International application number:
**PCT/JP2008/055903**

(87) International publication number:
**WO 2008/123363 (16.10.2008 Gazette 2008/42)**

(54) **METHOD FOR MANUFACTURING A COLD-FINISHED SEAMLESS STEEL PIPE FOR INTEGRALLY MOLDED DRIVE SHAFT**

VERFAHREN ZUR HERSTELLUNG EINES KALTBEARBEITETES NAHTLOSES STAHLROHR FÜR INTEGRAL GEFORMTE ANTRIEBSWELLE

PROCÉDÉ DE FABRICATION DU TUYAU EN ACIER SANS SOUDURE, FINI À FROID, POUR UN ARBRE DE TRANSMISSION MOULÉ D'UN SEUL TENANT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.03.2007 JP 2007091742**

(43) Date of publication of application:
**06.01.2010 Bulletin 2010/01**

(73) Proprietor: **Nippon Steel & Sumitomo Metal Corporation
Tokyo 100-8071 (JP)**

(72) Inventor: **YAMAMOTO, Tadayuki
Osaka-shi
Osaka 541-0041 (JP)**

(74) Representative: **Zimmermann & Partner
Postfach 330 920
80069 München (DE)**

(56) References cited:
EP-A1- 1 262 671    EP-A1- 1 595 609
EP-A1- 1 731 234    EP-A1- 1 743 950
WO-A1-2004/071686    WO-A1-2005/092531
WO-A1-2006/104023    JP-A- 2005 320 575

**Description**

TECHNICAL FIELD

The present invention relates to a method of efficiently producing a cold-finished seamless steel tube for a drive shaft.

BACKGROUND ART

Recently, the protection of the global environment is increasingly required, and weight lightening of automobile body and a further increase in energy saving effect are demanded in the field of automobile industry. Because of this, automobile parts are switched from solid members to hollow members from the viewpoint of auto body lightening, and hollow members using a steel tube which is hollow itself as source material are adopted for automotive drive shafts.

Hollow drive shafts include a joint type drive shaft and an integrally-formed type drive shaft. The joint type drive shaft is configured to use a steel tube not subjected to heat treatment such as induction hardening in its intermediate portion, use solid materials or forged steels at opposite end portions to be connected to a constant velocity joint and a differential gear and weld those with the above intermediate portion by friction pressure bonding or welding. The integrally-formed type drive shaft is known, for example, to have a structure in which both end portions of steel tube blank to be connected with constant velocity joints are subjected to a diameter reduction and wall thickening process and machining of spline as being an element for link mechanism, and induction hardening is applied to the whole.

Automotive drive shafts are essential safety parts that transmit the torque of the rotary shaft of an engine to tires and thus need to secure sufficient torsional rigidity and torsional fatigue strength.

Document EP 1595609 discloses a seamless steel tube for a drive shaft. An object of D1 is to produce hollow parts for a drive shaft in a manner in which relatively little inside-grinding process is applied and a subsequent cold-drawing process is applied to a hot-furnished steel tube produced by the Mannesmann tube-making method.

Document EP 1743950 relates to seamless steel tubes to be used as hollow shaft blanks which are suitable to reduce the weight of drive shafts used in automobiles. D2 describes a method for producing these seamless steel tubes.

Document EP 1731234 describes a method for manufacturing a tube using a sizing mill. D3 discloses the use of a grooved roll configured such that the angle β defined by the tangents satisfies the relationship: $\beta \geq 1.13 \times 10 \times \mathrm{Ln}$ (t/D x 100) + 1.37 x 102, with the aim of effectively suppressing generation and progression of wrinkles which may be caused on the inner surface of a pipe or tube.

Incidentally, when a seamless steel tube is used as hollow blank for the drive shaft, wrinkle-like flaws may remain in the inner surface of the steel tube, i.e., concavo-convex flaws formed on the inner surface when viewed in a cross section perpendicular to the longitudinal direction (hereinafter, referred to as, "inner surface wrinkles") depending on production conditions. When inner surface wrinkles remain, these easily become the cause of damages such as the initiation of fatigue cracks, significantly decreasing the fatigue resistance strength of the drive shaft.

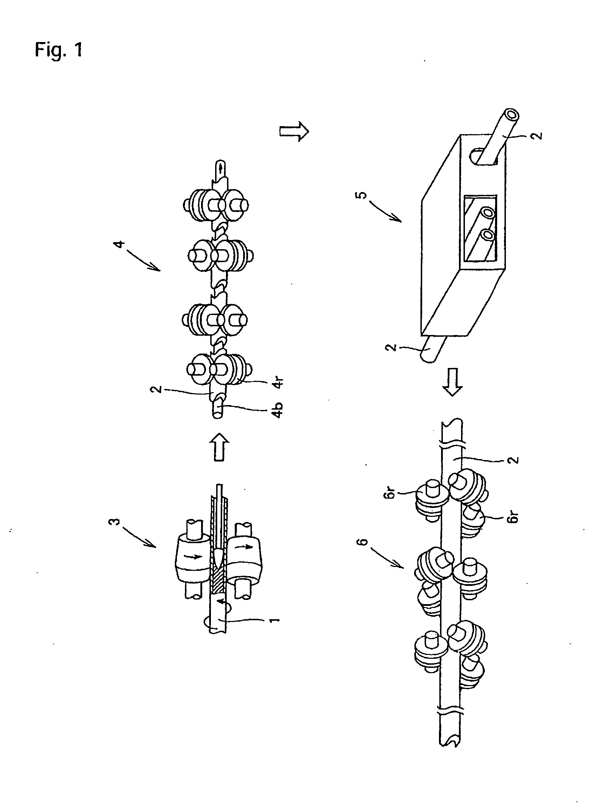

Fig. 1 is a diagram depicting one example of the production process of the Mannesmann tube-making method that produces a seamless steel tube in hot. This tube-making method involves producing a hollow shell 2 by piercing an axial center portion of a solid round billet 1 with a piercing mill 3, the billet as source material to be rolled to a hollow shell being heated to a predetermined temperature and then supplying the hollow shell to a subsequent elongation rolling machine of a mandrel mill 4 for elongation rolling. The hollow shell 2 passed through the mandrel mill 4 is then charged to a reheating furnace 5 for reheating, and then is passed through a sizing rolling mill of a stretch reducer 6 to produce a seamless steel tube to be used as mother tube for cold working, and the like.

In such a tube-making method, the shown stretch reducer 6 is configured such that a set of rolling rolls 6r that subject the hollow shell 2 to be processed in rolling are made to include three equally-spaced grooved rolling rolls 6r that are disposed about a pass line as the center line, these grooved rolling rolls 6r are put in place in each roll-stand, wherein a plurality of roll stands are usually used, and at an adjacent roll stand, the orientation of imparting pressure for metalworking by grooved rolling rolls 6r in a plane perpendicular to the pass line is shifted by 60 relative to that of the rolls of a reference roll-stand so that metal-working directions are alternated at the adjacent roll-stand.

The configuration of other stretch reducers 6 that can be adopted includes a four-roll sizing rolling mill comprising four grooved rolling rolls, the orientation of imparting pressure for metalworking by grooved rolls is shifted by 45° within a plane perpendicular to the pass line at an adj acent roll stand to thereby permit alternation of the orientation of imparting pressure for metalworking, and a two-roll sizing rolling mill including two grooved rolling rolls which are oppositely-disposed at each stand.

However, in the stretch reducer used as a sizing rolling mill, a hollow shell is finishing rolled by reducing-rolling for the outer diameter without the use of an inner surface restricting tool such as a mandrel, whereby longitudinal wrinkles are easily generated in the inner surface of the steel tube subjected to hot rolling.

In addition, in the example of the stretch reducer 6 shown in Fig. 1 above, since reducing-rolling for the outer diameter is performed by means of three rolling rolls, the hollow blank tube is subjected to rolling-working from circumferential three directions toward its pass line. Thus, the inner surface shape of the steel tube subjected to hot finishing does not become a perfect circle but becomes a squarish or a polygonized circle, so that concavo-convex shapes are highly likely to be formed in its inner surface.

In order to solve the problem of wrinkles of the inner surface of such a seamless steel tube, Japanese Patent No. 2822849 proposes a method of making the rolling reduction in a stretch reducer uniform between each stand and also machining the inner surface of a produced steel tube by shot blasting grinding or the like to produce a seamless steel tube for automobiles such as a drive shaft. According to this production method, the inner surface of a seamless steel tube subjected to hot rolling is machined by a thickness of 20 $\mu$m to 500 $\mu$m to thereby remove wrinkles generated in the inner surface of the steel tube and improve fatigue strength resistance.

However, an enormous processing time is needed for internal machining/grinding by such shot blasting. Specifically, for steel tubes adopted for drive shafts, small diameter tubular products with an inner diameter of about 15 to 25 mm (hereinafter, unless otherwise indicated, inner and outer diameters both refer to "diameter") are concerned. Applying shot blast processing to the inner surface of such a product requires an enormous processing time of tens of minutes to several hours in order to secure the above amount of grinding. On account of this, the production method proposed in Japanese Patent No. 2822849 above poses the large problems of increasing production cost as well as being incapable of securing mass productivity that is industrially needed.

As described above, for seamless steel tubes, steel tubes that are particularly widely industrially adopted and passed through a rolling process without an inside restricting tool such as a stretch reducer suffer from the problem of easily generating inner surface wrinkles due to its rolling mechanism. Therefore, in seamless steel tubes for drive shafts, the control of generation of inner surface wrinkles is an important subject.

In particular, when a seamless steel tube is utilized as source material for integrally-formed type drive shafts, the diameter reducing process could affect inner surface wrinkles or torsional fatigue strength. An electric resistance welded steel tube as source material has a structure in which steel sheet skelps with excellent dimensional accuracy and surface finish are formed into a preform of tubular shape and abutted and welded by electric resistance welding. As such, these tubes are almost free of inner surface wrinkles, and begins to be adopted for integrally-formed type drive shafts (e.g., see Japanese Patent Laid-Open No. 2002-356742). Seamless steel tubes pose the above problem and thus it has been premature to employ these in real earnest.

However, the electric resistance welded steel tube is likely to cause failures in the welded portion (electric resistance weld joint) that extends along the direction of axis, thus creating the problem of reducing strength as a power transmission shaft. Use of the seamless steel tube as source material does not give such concern, and therefore improvements so as to allow seamless tubes to be employed in earnest is strongly demanded.

DISCLOSURE OF THE INVENTION

As described above, how to suppress the inner surface wrinkles in seamless steel tubes for drive shafts is a big subject from the viewpoint of securing fatigue strength, and a demand for suppressing the generation of the inner surface wrinkles becomes severer, when a seamless steel tube is used as an integrally-formed type drive shaft.

In other words, for joint drive shafts by friction welding or the like, when a seamless steel tube to be used is processed by cold working, the inner surface after processing by cold finish simply becomes the inner surface of the drive shaft as having inner surface wrinkles in as-is condition. Meanwhile, it is highly concerned that when the integrally-formed type drive shaft is manufactured, diameter reduction processing is applied to both ends processed by cold working to thereby cause wall thickening there, which remarkably increases the wrinkle depth on the inner surface of tube in association with this diameter reduction processing.

In addition, when an integrally-formed type hollow drive shaft is manufactured by using a seamless steel tube as a hollow member, it is demanded that cracking attributable to drawing and spinning processes at tube ends be not generated. Moreover, for the improvement of performance of the drive shaft, it is demanded to harden even the inner surface of the steel tube by heat treatment after cold working and at the same time to secure high toughness, thus requiring both hardenability and toughness.

That is, cold-finished seamless steel tubes optimal for integrally-formed type drive shafts need to satisfy all of requirements such as cold workability of allowing complicated forming without trouble, a combination of hardenability and toughness by proper heat treatment and further fatigue strength as a drive shaft (torsional fatigue strength).

The present invention has been made in view of such technical backgrounds, and an object thereof is to provide a method of inexpensively producing the seamless steel tube for the integrally-formed type drive shaft, and an integrally-formed type drive shaft that can secure sufficient strength in torsional fatigue characteristics, and at the same time have cold workability and have both hardenability and toughness.

The drive shaft, which is a part that transmits the torque of rotating shaft of an automotive engine to tires, is desirably not to generate defects that could be the initiation of fatigue fracture. As described above, when the seamless steel tube is utilized as source material for a hollow drive shaft, axial inner surface wrinkles are likely to generate in the steel tube subjected to hot rolling, since the outer diameter of a hollow blank tube is finished by reducing-rolling without using an inner surface restricting tool in a sizing rolling mill such as a stretch reducer.

Typically, when the torque of rotating shaft is transmitted, a large shear stress is imposed to the outer surface of the drive shaft as compared with the inner surface. Thus, fatigue cracks generate and grow from the external surface side on which a larger shear stress is exerted as compared to the inner surface, in the case where in the absence of defects such as wrinkles on the inner surface of the drive shaft, the fatigue limit shear stress on both outside and inside surfaces is sufficiently large.

Additionally, for the external surface side, the surface inspection is easy and thus allowing it to be readily dealt even if there are defects to an extent that causes a problem in fatigue strength.

Therefore, if inner surface wrinkles to be generated on the inner surface side can be controlled such that the fatigue limit shear stress on the inner surface side does not exceed a specific shear stress defined on the external surface side even when inner surface wrinkles are present on the inner surface, even inner surface wrinkles remaining on a steel tube manufactured as a hollow member shall not impose adverse effect on the fatigue life of the drive shaft, thus posing no problem in practical use.

From such a viewpoint, the present inventor has investigated in detail the relationship between the depth of inner surface wrinkles which remain on a steel tube processed by cold finishing and which affect the fatigue life of the drive shaft and the torsional fatigue strength. As a result, the inventor found that the friction pressure bonding joint type drive shaft needs to have the depth of the inner surface wrinkles being 0.20 mm or less, and previously had proposed a seamless steel tube for drive shafts in which the depth of inner surface wrinkles remaining on the inner surface is specified (wherever needed, see WO2007/111258).

Incidentally, the integrally-formed type drive shaft has diameter reduced portions disposed on opposite ends and wall thickening occurs at the diameter reduced portions, which causes the problem of significantly increasing the depth of wrinkles on the inside surface during the diameter reducing process.

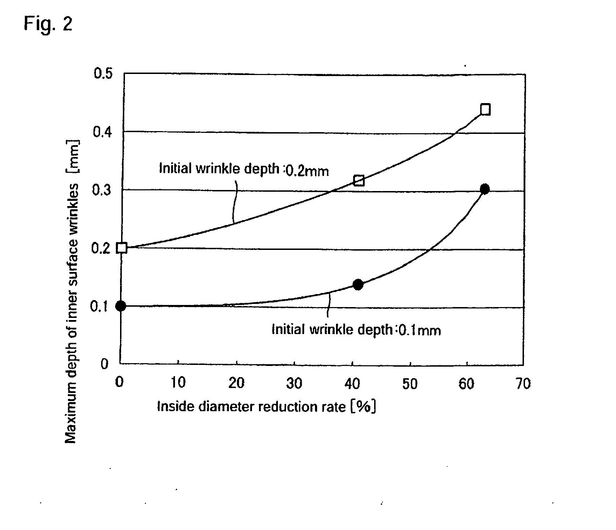

Fig. 2 is a diagram indicating the relationship between the initial depth of the inner surface wrinkle and the internal diameter reduction ratio in the diameter reduction processing of a seamless steel tube. The sample tube used in this diagram is a seamless steel tube cold-drawn to an outer diameter of 36 mm and a thickness of 8.0 mm. The diagram shows changes in the maximum value of the depth of wrinkles remaining on the inner surface of the sample tube in the diameter reduction processing.

In the following descriptions, the numerical value of the depth of an inner surface wrinkle indicates a maximum value of the depths of wrinkles, unless otherwise indicated. Moreover, the inner diameter reduction rate (%) is the value defined by equation (3) below:

$$\texttt{Inner diameter reduction rate = ((ID - IDf)/ID)} \times \texttt{100}$$
$$\texttt{(\%)} \ \ldots \ \texttt{(3)}$$

given that ID represents the inner diameter before diameter reduction processing, so IDf does after.

In Fig. 2 above, the sample tube with an initial wrinkle depth of 0.2 mm is a cold-finished seamless steel tube with artificial defects having a depth of 0.2 mm in the inside tube wall (a maximum wrinkle depth in the inner surface of the steel tube before diameter reduction processing for the inner diameter is 0.2mm). The graph shows that, when diameter reducing process for the inner diameter is performed by changing the internal diameter reduction rate (%), the wrinkle depth of 0.2 mm before diameter reduction processing is increased to 0.32 mm at an inner diameter reduction rate of 40% and to 0.44 mm at an inside diameter reduction rate of 61.9%.

Similarly, the sample tube with an initial wrinkle depth of 0.1 mm is a cold-finished seamless steel tube with an artificial defect depth of 0.1 mm on the inside surface. When diameter reduction processing was performed by changing the internal diameter reduction rate (%), a maximum wrinkle depth in the inside tube wall was 0.1 mm before diameter reduction processing and was increased to 0.30 mm or more at an inner diameter reduction rate of 61.9%.

In other words, when a seamless steel tube for a joint type drive shaft is manufactured, a depth of 0.2mm is allowed as an inner surface wrinkle remaining in the steel tube as indicated in the finding above by the present inventor. However, the depth of inner surface wrinkles needs to be more severely managed in a seamless steel tube for an integrally-formed type drive shaft in view of an increase in wrinkle depth in diameter reduction processing for the inner diameter in a stage of the part fabrication.

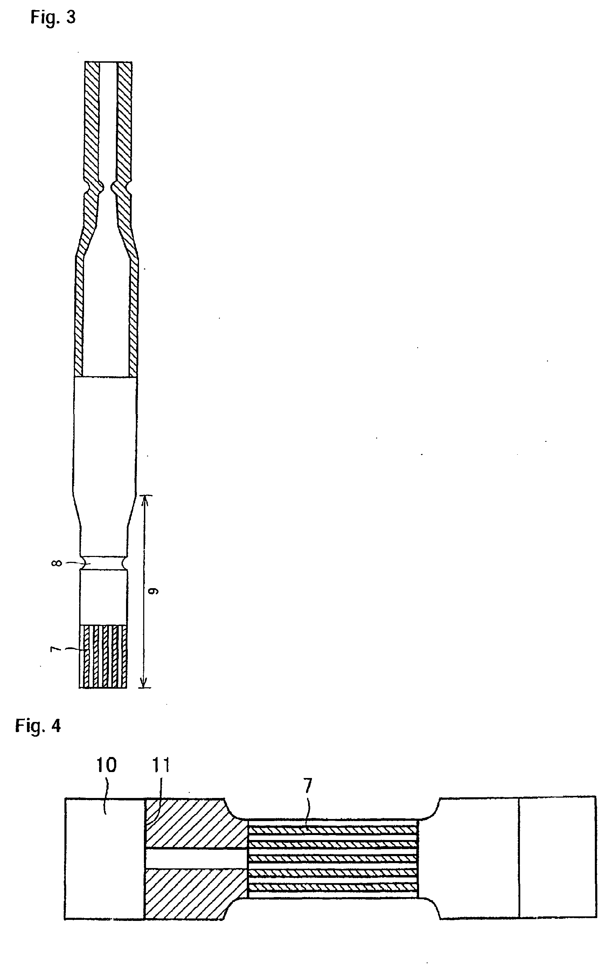

Fig. 3 is a diagram illustrating the configuration of an integrally-formed type drive shaft, the configuration of the left half is visual appearance, and the right half shows a cross-sectional view. A spline 7 as link element is disposed in opposite ends of the integrally-formed type drive shaft, and further a boot portion 8 is processed therein. A diameter reduced portion 9 shown in Fig. 3 is a region where diameter reduction processing is applied by swaging or the like, and is disposed in opposite end portions of a steel tube for a drive shaft.

Fig. 4 is a diagram indicating a general form of a test piece that simulates a spline-machined portion in order to evaluate the fatigue characteristics of the diameter reduced portion disposed in opposite ends of the integrally-formed type drive shaft as illustrated in Fig. 3 above. The spline-machined portions 7 are connected to jigs 10 at opposite ends via friction-pressure bonded portions 11. The present inventor examined torsional fatigue characteristics by simulation using a test piece with a spline-machined portion 7 as shown in Fig. 4.

As a result of a simulation test as long as the seamless steel tube member including a specified chemical composition is used, it has been shown that fatigue fractures are not generated from the inside tube surface in a torsional fatigue test, if the maximum wrinkle depth of the inside tube surface after diameter reduction processing is 0.2 mm or less, the fatigue test being performed for the wall-thickened steel tube member of diameter reduced portion that has the spline-machined portion on its outer surface, and all fatigue fractures are generated from the outside surface.

However, it has been shown that, when a seamless steel tube member that does not satisfy the specified chemical composition is used, a satisfactory fatigue strength cannot be secured even if a maximum wrinkle depth of the inside tube surface after diameter reduction processing is 0.2mm or less.

In addition, according to the result of the simulation test, a maximum wrinkle depth of the inside tube surface tends to increase sharply according to an increase in the inside diameter reduction rate as shown in Fig. 2, so that it is effective that the inside diameter reduction rate is suppressed as much as possible for suppression of the inner surface wrinkle depth. However, the forming and the wall thickening of diameter reduced portions are indispensable to secure the torsional stiffness at opposite ends of the drive shaft, and an inside diameter reduction rate of at least 30% is needed at opposite ends of tube member.

In reality, it is expected that the inside diameter reduction rate in diameter reduction processing at opposite tube ends is typically about 50%. It has been judged that a maximum depth of the inner surface wrinkle of a seamless steel tube that may be allowed for applications to integrally-formed type drive shafts is necessarily 0.1mm or less from such a realistic circumstance.

In addition, repeated studies of various tube-making conditions of seamless steel tubes make it possible to find that the depth of 0.1 mm or less for inner surface wrinkles remaining in the inside tube surface can be achieved by adjusting the groove profile in sizing rolling after piercing rolling and elongation rolling by the Mannesmann method and by adjusting a thickness reduction rate in subsequent cold drawing.

The present invention has been made on the basis of the findings described above and provides methods of producing cold-finished seamless steel tubes for integrally-formed type drive shafts of (3) and (4). As a result of these methods, cold-finished seamless steel tubes for integrally-formed type drive shafts of (1) and (4) below and drive shafts of (2) and (4) below may be obtained.

(1) A cold-finished seamless steel tube for an integrally-formed type drive shaft in which a chemical composition comprises: in % by mass, C: 0.30 to 0.38%, Si: 0.50% or less, Mn: 0.30 to 2.00%, P: 0.025% or less, S: 0.005% or less, Cr: 0. 15 to 1.0%, Al: 0. 001 to 0.05%, Ti: 0.005 to 0.05%, N: 0.02% or less, B: 0.0005 to 0.01%, and O (oxygen): 0.0050% or less, the balance being Fe and impurities, wherein Beff defined by (1a) and (1b) below satisfies 0.0001% or more, and a maximum depth of an inner surface wrinkle remaining in the inner surface, as being defined in a cross section perpendicular to a longitudinal direction, is 0.10 mm or less.

given that Ti, N, and B are represented in terms of content (%),

when N - 14 × Ti/47.9 ≥ 0

$$Beff = B - 10.8 \times (N - 14 \times Ti/47.9)/14 \; ... \; (1a)$$

Similarly, when N - 14 × Ti/47.9 < 0

$$Beff = B \; ... \; (1b)$$

(2) A drive shaft integrally-formed type in which diameter reduction processing is applied to a seamless steel tube for providing diameter reduced portions, having a chemical composition which comprises: by mass %, C: 0.30 to 0.38%, Si: 0.50% or less, Mn: 0.30 to 2.00%, P: 0.025% or less, S: 0.005% or less, Cr: 0.15 to 1.0%, Al: 0.001 to 0.05%, Ti: 0.005 to 0.05%, N: 0.02% or less, B: 0.0005 to 0.01%, and O (oxygen) : 0.0050% or less, the balance being Fe and impurities, wherein Beff defined by (1a) and (1b) satisfies 0.0001% or more, 12 and wherein in the above diameter reduction processing, an inside diameter reduction rate as at least one representation of reduction rate is 30% or more, and a maximum depth of the inner surface wrinkle remaining in the inner surface, as being defined in a cross section perpendicular to a longitudinal direction, is 0.20 mm or less.

(3) A method of producing a cold-finished seamless steel tube for an integrally-formed type drive shaft in which a billet in chemical composition: (a) comprises , by mass %, C: 0.30 to 0.38%, Si: 0.50% or less, Mn: 0.30 to 2.00%, P: 0.025% or less, S: 0.005% or less, Cr: 0.15 to 1.0%, A1: 0.001 to 0.05%, Ti: 0.005 to 0.05%, N: 0.02% or less, B: 0.0005 to 0.01%, and O (oxygen): 0.0050% or less, the balance being Fe and impurities ;and (b) the chemical composition is configured so that Beff defined by (1a) and (1b) above satisfies 0.0001% or more, wherein when the above billet is subjected to piercing rolling by the Mannesmann tube-making method followed by elongation rolling and then subjected to sizing rolling by use of a sizing rolling mill including a plurality of roll-stands each provided with at least two grooved rolling rolls, hollow shells are rolled into mother tubes using grooved rolling rolls that satisfy a relation represented by the equation (2) below where a minimum angle among all in all roll stands in terms of angle β (degrees) is determined expressed by βmin (degrees), given that tangent lines drawn at adjacent roll edges oppositely-disposed to each other form an angle β (degrees), and wherein further a thickness reduction rate at the minimum thickness portion of the mother tube is set to 10% or more when said mother tube is cold-drawn.

$$\beta min \geq 1.13 \times 10 \times \ln(t/D \times 100) + 1.37 \times 10^2 \quad ... \quad (2)$$

given that D is the outer diameter of the tube after sizing rolling (mm), t is the wall thickness of the tube after sizing rolling (mm), and ln(x) is the natural logarithm of x.

In the method of producing a cold-finished seamless steel tube for an integrally-formed type drive shaft of the present invention, annealing or normalizing after cold drawing is desirably carried out.
(4) Element(s) of one or more of groups selected from those (a) to (c) below is(are) desirably contained in lieu of a part of Fe in the chemical compositions of (1) and (2) above and of the billet used in the production method of (3) above.

(a) One or more elements selected from Cu: 1% or less, Ni: 1% or less and Mo: 1% or less
(b) One or more elements selected from V: 0.1% or less, Nb: 0.1% or less and Zr: 0.1% or less
(c) One or more elements selected from Ca: 0.01% or less, Mg: 0.01% or less, and rare earth metals (REM): 0.01% or less

According to a method of producing a cold-finished seamless steel tube for an integrally-formed type drive shaft of the present invention, applying cold drawing to a mother tube hot-rolled by the Mannesmann method makes it possible to manufacture a reliable integrally-formed type drive shaft which is excellent in torsional fatigue characteristics and cold workability and at the same time can exhibit both hardenability and toughness without applying machining such as special grinding of the inside tube surface, and thus contribute streamlining its manufacturing step as well as the improvement of lightness and quietness of an automotive drive shaft.
Therefore, the application of the production method of the present invention enables an automotive drive shaft to be manufactured at inexpensive manufacturing cost and efficiently, whereby the production method can have a large industrial effect and be applied widely.

BRIEF DESCRIPTION OF THE DRAWINGS

Fig. 1 is a diagram depicting one example of the production process of the Mannesmann tube-making method that produces a seamless steel tube in hot.
Fig. 2 is a diagram indicating the relationship between the initial depth of the inner surface wrinkle and the inside diameter reduction rate in the diameter reduction processing of a seamless steel tube.
Fig. 3 is a diagram illustrating the configuration of an integrally-formed type drive shaft, the configuration of the left half is a visual appearance, and the right half shows a cross-sectional representation.
Fig. 4 is a diagram indicating a general form of a test piece for simulation of a spline-machined portion in order to evaluate the fatigue characteristics of the diameter reduced portion disposed in opposite end portions of the integrally-formed type drive shaft.
Fig. 5 is a diagram indicating a groove geometry in a rolling roll used for a three-roll stretch reducer.
Fig. 6 is a diagram depicting a determination procedure of the angle that is formed by tangent lines drawn at adjacent roll edges oppositely-disposed to each other in order to specify grooved rolling rolls used for the present invention.

Fig. 7 is a diagram indicating a broken away partial groove contour in other type of rolling rolls used for a stretch reducer.

Fig. 8 is a sectional view indicating a shape of a spline-machined portion of a test specimen supplied to a torsional fatigue test used in Example 2.

BEST MODE FOR CARRYING OUT THE INVENTION

Steel compositions and production conditions needed for the method of producing a cold-finished seamless steel tube for an integrally-formed type drive shaft of the present invention to exhibit the above features will be separately described in this section. In the descriptions below, the chemical composition of steel is expressed by "by mass %".

1. Steel composition

C: 0.30 to 0.38%

C is an element that increases steel strength to improve fatigue resistance strength but serves to decrease toughness to thereby heighten quenching crack susceptibility. If its content is less than 0.30%, an adequate strength is not obtained. On the other hand, if the content exceeds 0.38%, the element could decrease cold workability and toughness as well as could generate quenching crack in an induction hardening stage.

Si: 0.50% or less

Si is an element needed as a deoxidizing agent. However, if its content exceeds 0.5%, cold workability cannot be secured, so that the content was set to 0.5% or less. The smaller the Si content is, the more the cold workability is improved. Thus, for coping with much challenging cold working, the Si content is desirably 0.22% or less and is more desirably 0,14% or less when the steel is to be subjected to much severer working condition.

Mn: 0.30 to 2.00%

Mn is an element effective to secure hardenability in heat treatment and to improve strength and toughness. The Mn content needs to be 0.3% or more to exhibit its effect and to sufficiently harden the whole thickness up to the inner surface. On the other hand, if the Mn content exceeds 2.0%, cold workability is decreased. Because of this, the Mn content was set to be from 0.3 to 2.0%. In addition, the Mn content is desirably from 1.1 to 1.7%, more desirably from 1.2 to 1.4% to secure hardenability and cold workability in a good balance.

P: 0.025% or less

P is included in steel as an impurity and concentrates in the vicinity of the final solidification position at the time of solidification, and also segregates along grain boundaries to decrease hot workability, toughness, and fatigue strength. When the P content exceeds 0.025%, toughness decreases significantly due to grain boundary segregation, which induces intergranular fracture to make the torsional fatigue strength unstable. A desirable P content is 0.009% or less to maintain toughness and fatigue strength of the drive shaft at a high level.

S: 0.005% or less

S is included in steel as an impurity and segregates along grain boundaries at the time of solidification to decrease hot workability and toughness, and particularly decreases cold workability and torsional fatigue strength when a seamless steel tube is adopted as a hollow shaft source material. On account of this, the S content needs to be 0.005% or less to secure cold workability and torsional fatigue strength after heat treatment, both of which are required for a seamless steel tube used as a hollow shaft source material of a drive shaft.

Cr: 0.15 to 1.0%

Cr is an element that increases fatigue strength without decreasing cold workability too much and is also effective for improvement of hardenability as B is likewise. Accordingly, the Cr content is to be 0.15% or more to secure a specified fatigue strength. On the other hand, if the Cr content exceeds 1.0%, cold workability is significantly decreased. Because of this, the Cr content was set to be from 0.15 to 1.0%.

Further, the Cr content is desirably from 0.2 to 0.8%, more desirably from 0.3 to 0.6% to secure fatigue strength, cold workability and hardenability in a good balance.

Al: 0.001 to 0.05%

Al is an element that serves as a deoxidizing agent. The Al content needs to be 0.001% or more to exert an effect as a deoxidizing agent, but if its content exceeds 0.05%, the amount of alumina-based inclusions is increased to decrease fatigue strength as well as surface quality of machined surfaces. Because of this, the Al content was set to be from 0.001 to 0.05%. In addition, the A1 content is desirably from 0.001 to 0.03% to secure a stable surface quality.

For Ti, N and B described below, the content of each element is specified respectively and at the same time further conditional expressions that specify their mutual content balance need to be satisfied to secure hardenability of steel.

Ti: 0.005 to 0.05%

Ti has the function of immobilizing N in steel as TiN. However, if the Ti content is less than 0.005%, Ti does not sufficiently have the ability of immobilizing N, while if Ti exceeds 0.05%, cold workability and toughness of steel are decreased. Thus, the Ti content is set to be from 0.005 to 0.05%.

N: 0.02% or less

N is an element that decreases toughness and tends to readily bond with B in steel. If the N content exceeds 0.02%, cold workability and toughness decrease significantly, so that its content was set to 0.02% or less. The N content is preferably 0.01% or less, more preferably 0.007% or less, from the viewpoint of improving cold workability and toughness.

B (boron): 0.0005 to 0.01%

B is an element that improves hardenability. If its content is less than 0.0005%, hardenability is insufficient, while if the content exceeds 0.01%, cold workability and toughness are decreased. Therefore, the B content was set to be from 0.0005 to 0.01%.

In addition, in order for B to serve to improve hardenability, Beff specified by the equation (1a) or (1b) below needs to satisfy 0.0001 or more.

In other words, when $N - 14 \times Ti/47.9 \geq 0$

$$Beff = B - 10.8 \times (N - 14 \times Ti/47.9)/14 \dots (1a)$$

Similarly, when $N - 14 \times Ti/47.9 < 0$,

$$Beff = B \dots (1b)$$

The effect of N in steel needs to be removed in order for B to exert the function of improving hardenability. B is likely to unite with N and when free N is present in steel, B readily unites with N to produce BN, whereby the B's function of improving hardenability could not be exerted. Because of this, Ti is added according to the N content and N is immobilized as TiN, whereby B is made to be freely present in steel and to effectively act to improve hardenability. Thus, Beff specified by the equation (1a) or (1b) above needs to satisfy 0.0001 or more.

Additionally, the larger the value of Beff is, the more the hardenability is improved, and hence Beff desirably satisfies 0.0005 or more, more desirably 0.001 or more.

O (oxygen): 0.0050% or less

O is an impurity that decreases toughness and fatigue strength. If the O content exceeds 0.0050%, toughness and fatigue strength decrease remarkably, so that its content was specified to be 0.0050% or less.

In addition, the method of producing a cold-finished seamless steel tube for an integrally-formed type drive shaft of the present invention can include, in addition to the above steel composition, one or more elements of Cu: 1% or less, Ni: 1% or less, Mo: 1% or less, V: 0.1% or less, Nb: 0.1% or less, Zr: 0.1% or less, Ca: 0.01% or less, Mg: 0.01% or less, and rare earth metals (REM) : 0.01% or less, to improve various characteristics in addition to fatigue resistance strength.

Cu: 1% or less, Ni: 1% or less and Mo: 1% or less

Cu, Ni and Mo serve to improve hardenability to increase strength of steel and are effective for improvement of fatigue strength. One or more elements out of them can be included to seek to exert these effects. For pursuing the above effects, any one of Cu, Ni and Mo is desirably included in an amount of 0.05% or more. However, if its content exceeds 1%, cold workability is decreased remarkably. Thus, when included, the upper limit of any one of Ni, Mo and Cu is 1%.

V: 0.1% or less, Nb: 0.1% or less and Zr: 0.1% or less

V, Nb and Zr each form carbides and are effective for improving toughness by prevention of crystal grain coarsening. Therefore, when toughness of steel is to be improved, one or more elements out of them can be included. For pursuing the above effect, for any one of V, Nb and Zr, the content is desirably 0.005% or more. However, if the content exceeds 0.1% for any case, coarse precipitates generate, resulting in decrease in toughness to the contrary. Thus, when included, the upper limit of any one of V, Nb and Zr is 0.1%.

Ca: 0.01% or less, Mg: 0.01% or less, and rare earth metals (REM): 0.01% or less

Ca, Mg, and REM each contribute to the improvement of cold workability and torsional fatigue strength. When these effects are pursued, one or more elements out of them can be included. For any one of Ca, Mg and REM, including it by 0.0005% or more provides a remarkable effect. However, if the content exceeds 0.01% for any case, coarse inclusions generate, resulting in decrease in fatigue strength to the contrary. Because of this, when included, the content of any one of Ca, Mg and REM is desirably set to be from 0.0005 to 0.01%.

2. Production conditions

2-1. Production conditions in a step of hot working

One example of the method of producing the cold-finished steel tube for an integrally-formed type drive shaft of the present invention, as shown in Fig. 1 above, may be the Mannesmann tube-making method by means of a mandrel mill and a stretch reducer. At this time, in sizing rolling by a stretch reducer, roundness in bore of rolled tube can be appropriately improved, so that polygon-like shaping of the inner surface contour in the rolling procedure can be suppressed, and the generation and development of inner surface wrinkles can be suppressed effectively.
Specifically, when sizing-rolling is performed using a sizing rolling mill such as a stretch reducer comprising a plurality of roll-stands after piercing rolling followed by elongation rolling, given that there stands an angle β (degrees) which is formed by tangent lines to be drawn at adjacent roll edges in an opposing relation to each other in each of the above roll-stands, and a minimum angle in terms of β (degrees) among all roll-stands is assessed and expressed by βmin (degrees), it becomes necessary to use grooved rolling rolls that satisfy the relation of equation (2) below.

$$\beta min \geq 1.13 \times 10 \times \ln(t/D \times 100) + 1.37 \times 10^2 \quad \dots (2)$$

wherein D is the outer diameter of the tube after sizing rolling (mm), t is the wall thickness of the tube after sizing rolling (mm), and ln(x) is the natural logarithm of x.

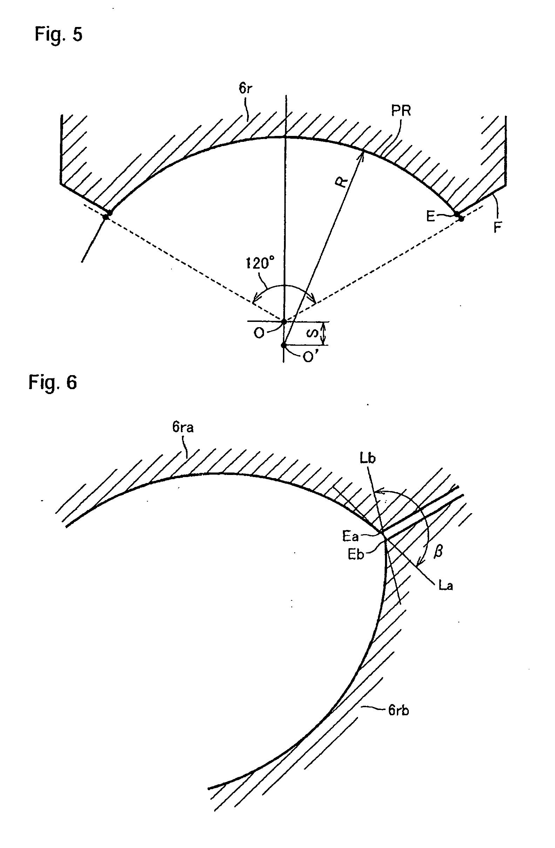

Fig. 5 is a diagram indicating a groove geometry in a rolling roll used for a three-roll stretch reducer. The groove geometry of a grooved rolling roll 6r placed in the stretch reducer has a circular arc with a radius R from the geometry center O' offset (amount of offset S) outward from the groove center O positioned at the pass line, and this arc constitutes a groove profile PR which intersects with the sidewall surface F of the flange of rolling roll 6r. In addition, edges E of rolling roll 6r are ends of the groove profile PR, corresponding to ends of the arc with the above radius R.
As described above, during sizing rolling by a stretch reducer, inner surface wrinkles in a rolled tube are generated at locations corresponding to edges of rolling rolls, and thus it is foreseeable that the groove profile is made proper, and since there is a certain relation between the radius of curvature of the tube inner surface in positions corresponding to edges, an average inside radius (average of minor radius and major radius) and the depth of inner surface wrinkles, as indicated by equation (2) above, a minimum angle in terms of angle βmin may be set at a specified value relative to t/D.

Fig. 6 is a diagram depicting a determination procedure of the angle which is formed by tangent lines drawn at adjacent roll edges in order to specify grooved rolling rolls used for the present invention. First, a tangent line (tangent line of the groove profile in the vicinity of edge Ea) La is drawn at edge Ea of rolling roll 6ra disposed in each roll-stand of the stretch reducer, a tangent line (tangent line of the groove profile in the vicinity of edge Eb) Lb is drawn at an adjacent edge Eb that is oppositely-disposed to edge Ea among edges of the rolling roll 6nb, and then the angle β which two tangent lines La and Lb form is determined.

Next, a minimum angle of respective determined angles in terms of β in all roll-stands is taken as βmin and the groove profile of the grooved rolling roll 6r may be set such that an equation (2) above is satisfied. When sizing rolling is carried out by a stretch reducer using the rolling roll 6r set as described above, the generation of the inner surface wrinkles of the rolled tube can be suppressed, and even if inner surface wrinkles are generated, their development can be effectively suppressed.

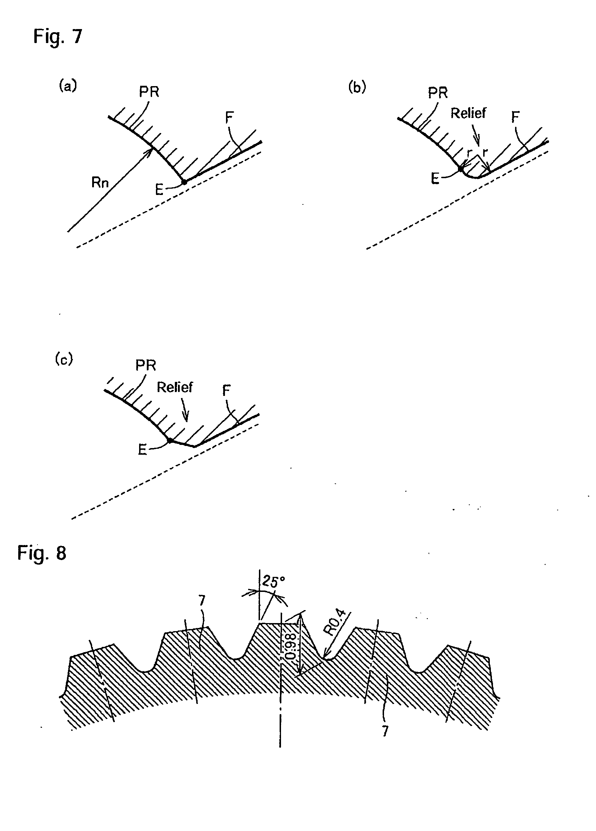

Fig. 7 is a diagram indicating a partial groove profile in another rolling mill roll used for a stretch reducer. The groove profile of the rolling roll 6r targeted by the present invention is not limited to the configurations in Figs. 5 and 6 above, and such a configuration can be covered that a circular contour consisted of a plurality of circular arcs each with a different radius can be provided as a groove profile PR of grooved rolling roll 6r, intersecting with the sidewall surface F of flange, as shown in Fig. 7(a). Edges E of grooved rolling roll 6r in this case correspond to ends of the circular contour (radius Rn) situated nearest to sides of the flange.

Additionally, as shown in Figs. 7(b) and 7(c), the groove profile can adopt a configuration in which a "relief" portion made of a circular arc or made of a linear line is provided between the groove profile PR and the sidewall surface F of the flange of grooved rolling roll 6r. Edges E of grooved rolling roll 6r in this case correspond to ends of the circular contour constituting the groove profile PR (ends of the circular contour situated nearest to sides of the flange).

2-2. Production conditions in a step of cold working

As described above, the tube blank subjected to sizing-rolling by the stretch reducer was reduced to deform in two to four circumferential directions due to outer diameter reducing-rolling, whereby inner surface wrinkles or a corner-ridden contour may be generated in positions corresponding to edges of rolling rolls. In particular, when a grooved rolling roll that satisfies equation (2) above is not used, the generation of inner surface wrinkles or the corner-ridden contour becomes notable.

In the method of producing a cold-finished steel tube for a drive shaft of the present invention, mother tubes are made by hot rolling, and then subjected to a drawing process, so that not only the development of inner surface wrinkles is suppressed, but the generated corner-ridden contour can be improved. In addition, the entire inside and outside surfaces of steel tube as end product can be smoothed.

The drawing process applied in the present invention may use either a cylindrical plug or an SF plug (semi-floating plug) so long as a mandrel (plug) drawing is applied.

In the drawing process applied in the present invention, neither the area reduction rate nor the average thickness reduction rate are particularly limited, but it is necessary to secure 10% or more for the thickness reduction rate of steel tube after hot tube making in the minimum thickness portion in a circumferential direction in the cold drawing stage.

As described above, the inner surface geometry of steel tube after hot rolling is not true circle and becomes a corner-ridden contour or polygon-like contour, and therefore a prescribed thickness reduction rate cannot be secured and thus inner surface wrinkles are likely to be developed/accelerated in accompany of wall thickness eccentricity and the like in the minimum thickness portion of steel tube (the bottom of corner/valley in a corner-ridden contour). However, the development/acceleration of inner surface wrinkles can be suppressed by securing 10% or more for the thickness reduction rate in the cold drawing stage in the above minimum thickness portion. Moreover, a maximum wrinkle depth of the inner surface of steel tube can be suppressed to 0.1 mm or less in combination with the sizing rolling that satisfies the relation of equation (2) above.

In addition, heat treatment by annealing or normalizing is desirably applied to a cold-drawn steel tube. This is because subsequent diameter reduction processing at opposite ends of hollow member is facilitated in processing to an integrally-formed type drive shaft. Heat treatment is desirably carried out in the temperature range of 850°C to 950°C as for normalizing, and in the temperature range of 680°C to 720°C as for annealing.

2-3. Processing to integrally-formed type drive shaft

A general geometry of an integrally-formed type drive shaft is shown in Fig. 3 above. The manufacture of an integrally-formed type drive shaft involves producing cold-finished seamless steel tubes on the basis of the method of tube making of the present invention, and subjecting opposite end portions of a piece of steel tube - a maximum wrinkle depth on the inner surface thereof is suppressed - to wall thickening at diameter reduced portions by means of swaging process, or the like. The inside diameter reduction rate in diameter reduction processing is set to be at least 30% or more. If the inside diameter reduction rate is less than 30%, a sufficient torsional stiffness cannot be secured at tube end portions.

Additionally, as shown in Fig. 2, if the inside diameter reduction rate is less than 30%, an increase in the wrinkle depth of the inside surface accompanied by diameter reduction processing is not notable, whereby the depth of inner surface wrinkles in the state of cold finish does not necessarily need to be 0.1 mm or less. Because of this, in the integrally-formed type drive shaft of the present invention, at least part of the diameter reduction processing portion needs to be processed with an inside diameter reduction rate of 30% or more.

The upper limit of the inside diameter reduction rate is not particularly defined, but when it exceeds 60%, it is difficult to control the depth of a maximum wrinkle remaining on the inside surface of the diameter reduced portion to be 0.2 mm or less unless the wrinkle depth in the inside surface after cold drawing should be substantially small. On account of this, the upper limit of the inside diameter reduction rate is desirably 60%, more desirably 52% or less.

As shown in Fig. 3 above, needed processing such as spline-machining as a link mechanism is applied to opposite end portions of a drive shaft. Induction hardening and tempering are desirably carried out to secure necessary mechanical characteristics. Hardness of Hv 550 to 595 can be secured by this hardening and tempering. However, if hardness exceeds Hv 600, the fatigue characteristic could be decreased.

EXAMPLES

(Example 1)

In the example, billets having a chemical composition shown in Table 1 were used. In addition, as shown in the column of hot tube making in Table 2, while the groove geometry of a three-roll stretch reducer (minimum flange contact angle βmin of a grooved rolling roll) was varied, piercing rolling by means of usual Mannesmann-mandrel mill finishing is applied to billets to thereby produce mother tubes with an outer diameter of 45.0 mm and a thickness of 7.0 to 7.4mm for cold drawing.

[Table 1]

Table 1

| Chemical composition (by mass %, the balance being Fe and impurities) | | | | | | | | | | |
|---|---|---|---|---|---|---|---|---|---|---|
| C | Si | Mn | P | S | Al | Cr | Ti | B | N | O |
| 0.35 | 0.18 | 1.32 | 0.008 | 0.001 | 0.040 | 0.18 | 0.024 | 0.0013 | 0.0041 | 0.0015 |

A minimum thickness in a circumferential direction and each depth of generated inner surface wrinkles, at this time, were measured. The processing conditions in the hot tube making step (rolling roll conditions of the stretch reducer and others) and the measurement results of said minimum thickness and each depth of inner surface wrinkles, at this time, are also shown in the column of the hot tube making in Table 2.

The above mother tube for cold drawing was finished to a product with an outer diameter of 36.0 mm and a thickness of 6.2 mm by cold drawing, which was then subjected to normalizing (soaking at 870°C for 5 min) as the final heat treatment to produce a cold-finished seamless steel tube.

Dimensions of products after cold drawing, area reduction rates, average thickness reduction rates, thickness reduction rates in minimum thickness portions, depths of inner surface wrinkles and Vickers hardnesses after cold drawing are shown in the column of cold drawing in Table 2. Here, the area reduction rate is defined by the equation (4) below:

$$\text{Area reduction rate} = \{(A - Af)/A\} \times 100 \; (\%) \; \ldots \; (4)$$

wherein A represents the sectional area before drawing and Af represents the sectional area after drawing.

In addition, the thickness reduction rate is defined by the equation (5) below:

$$\text{Thickness reduction rate} = \{(T - Tf)/T\} \times 100(\%) \; \ldots \; (5)$$

wherein T represents the thickness before drawing and Tf represents the thickness after drawing.

The above steel tube for diameter reduction processing at tube end portions was cut into pieces which then are subjected to a diameter reducing process with inside diameter reduction rates of 32.6%, 50% and 61.9% to evaluate fatigue characteristics as the integrally-formed type drive shaft of the above cold-finished seamless steel tube. Table 2 shows the conditions of diameter reduction processing and measurement results of the wrinkle depth after diameter reduction processing. Additionally, the depth measurement of inner surface wrinkles involved collecting a sample for microscopic observation from a tube end portion and conducting microscopic observation of the entire circumference of the inner surface in a cross section whose plane is perpendicular to a longitudinal direction.

[Table 2]

Table 2

| Step | Production and processing conditions | Sample A | Sample B | Sample C | Sample D | Sample E | Sample F | Sample G | Sample H | Sample I |
|---|---|---|---|---|---|---|---|---|---|---|
| Hot tube making | Size of steel tube after tube making (size of mother tube for cold drawing) | Outer diameter (D):45.0mm Thickness (t):7.3mm t/D=16.2% | | | Outer diameter (D):45.0mm Thickness (t):7.3mm t/D=16.2% | | Outer diameter (D):45.0mm Thickness (t):7.0mm t/D=15.6% | | Outer diameter (D):45.0mm Thickness (t):7.4mm t/D=16.4% | |
| | βmin (degree) | 170 | | | *165 | | 175 | | 173 | |
| | Right-hand side value of equation (2) | 168.5 | | | 168.5 | | 168.0 | | 168.6 | |
| | Minimum thickness in circumferential direction of tube (mm) | 6.9 | | | 7.0 | | 6.6 | | 7.1 | |
| | Depth of inner surface wrinkles after tube making (mm) | 0.06 | | | 0.14 | | 0.05 | | 0.02 | |

EP 2 140 950 B1

Table 2-Continued

| Step | Production and processing conditions | Sample A | Sample B | Sample C | Sample D | Sample E | Sample F | Sample G | Sample H | Sample I |
|---|---|---|---|---|---|---|---|---|---|---|
| Cold drawing | Product size after cold drawing | Outer diameter (D):36.0mm Thickness (t):6.2mm | | | Outer diameter (D):36.0mm Thickness (t):6.2mm | | Outer diameter (D):36.0mm Thickness (t):6.2mm | | Outer diameter (D):36.0mm Thickness (t):6.2mm | |
| | Area Reduction Rate (%) | 32.9 | | | 32.9 | | 30.5 | | 33.6 | |
| | Average thickness reduction rate | 15.1 | | | 15.1 | | 11.4 | | 16.2 | |
| | Thickness reduction rate in minimum thickness portion (%) | 10.1 | | | 11.4 | | *6.1 | | 12.7 | |
| | Depth of inner surface wrinkles after cold drawing (mm) | 0.09 | | | 0.17 | | 0.13 | | 0.03 | |
| | Average hardness after drawing (Hv) | 182 | | | 178 | | 177 | | 180 | |

EP 2 140 950 B1

EP 2 140 950 B1

Table 2-Continued

| Step | Production and processing conditions | Sample A | Sample B | Sample C | Sample D | Sample E | Sample F | Sample G | Sample H | Sample I |
|---|---|---|---|---|---|---|---|---|---|---|
| Diameter reduction processing | Outer diameter after diameter reduction (mm) | 30 | 27 | 25 | 27 | 25 | 27 | 25 | 30 | 25 |
| | Thickness after diameter reduction (mm) | 7.0 | 7.6 | 8.0 | 7.6 | 8.0 | 7.6 | 8.0 | 7.0 | 8.0 |
| | Inside diameter reduction rate (%) | 32.6 | 50 | 61.9 | 50 | 61.9 | 50 | 61.9 | 32.6 | 61.9 |
| | Depth of inner surface wrinkles after diameter reduction of inner diameter (mm) | 0.12 | 0.16 | *0.30 | * 0.27 | *0.36 | * 0.24 | * 0.34 | 0.04 | 0.07 |
| QT | Average hardness (Hv) | 575 | 565 | 575 | 591 | 582 | 562 | 578 | 556 | 558 |

Note: • The values expressed by * in the table indicates that they deviate from the ranges specified in the present invention.

The results for Samples A to C in Table 2 indicate that the depth of an inner surface wrinkle in the state of cold finish can be controlled to be 0.1 mm or less by using a grooved roll, stipulated in the present invention in the sizing rolling stage and securing 10% or more for the thickness reduction rate in the minimum thickness portion of the mother tube in the stretch reducer cold drawing stage.

In addition, for Samples A and B, the inside diameter reduction rates during diameter reduction processing were 32.9% and 50% and maximum wrinkle depths after diameter reduction were able to be controlled to 0.12 mm and 0.16 mm, respectively. However, for Sample C in which the inner diameter reduction rate during diameter reduction processing was 61.9%, the depth of the inner surface wrinkle after diameter reduction was increased to 0.30 mm.

In Table 2, Samples D and E were subjected to the conditions such that in a stretch reducer, a groove profile deviates from the range specified in the present invention, was used and the thickness reduction rate in the minimum thickness portion of the mother tube during cold drawing was set to 10% or more. The result was that the wrinkle depths after hot tube making were as large as 0.14 mm, increased to 0.17 mm after cold drawing, and in the case where the inner diameter reduction rate at diameter reduction processing were both 50% and 61.9%, the depths of the inner surface wrinkles after diameter reduction processing substantially exceeded 0.20 mm.

In Table 2, Samples F and G were subjected to the conditions such that a grooved roll, stipulated in the present invention in the sizing rolling stage, of a stretch reducer was used and the thickness reduction rate in the minimum thickness portion of the mother tube during cold drawing was set at 6.1%. In this case, the result was that though the inner surface wrinkle depth after hot tube making was 0.05 mm, the wrinkle depth was increased to 0.13 mm after cold drawing and after diameter reduction processing in case where the inner diameter reduction rate were both 50% and 61.9%, the depths of the inner surface wrinkles after diameter reduction processing substantially exceeded 0.20 mm.

In Table 2, Samples H and I were subjected to the conditions such that a grooved roll, stipulated in the present invention in the sizing rolling stage, of a stretch reducer was used and the thickness reduction rate in the minimum thickness portion of the mother tube during cold drawing was set at 12.7%. In this case, the depth of an inner surface wrinkle after hot tube making was 0.02 mm and also after cold drawing the depth was able to be controlled to 0.03 mm, and after diameter reduction processing, the depth of an inner surface wrinkle was able to be controlled to 0.07 mm even in the case where the inner diameter reduction rate was 61.9%.

(Example 2)

Torsional fatigue tests were carried out on Samples A. to I which were subjected to diameter reduction processing in Example 1. In the sample subjected to diameter reduction processing, as shown in Fig. 4 above, for the longitudinal mid portion of the test piece after cold drawing was taken off (machined) by 3.5 mm (thickness-wise, reduced by 1.75 mm) to form a parallel portion with a length 150 mm. This portion is then subjected to a spline-machining to mock up a test specimen simulating a spline-machined portion of an integrally-formed type drive shaft.

Fig. 8 is a broken away partial cross sectional view indicating a spline-machined shape of a test piece to be subjected to a torsional fatigue test used in Example 2. The number of teeth in the spline-machined portion is in the range of 25 to 31, as slight variations are discerned depending on the outer diameter after machining the outer diameter as above. The depth of the concave portions was set to 0.98 mm, the radius of curvature of the bottom of the concave portion to 0.4 mm, and the inclination angle of side-wall surface in the concave portion to 25 degrees (°).

The test piece obtained in this manner simulating the state of opposite end portions after the diameter reduction processing for an integrally-formed type drive shaft was subjected to induction hardening (simple quenching at 920°C) and heat treatment (150°C $\times$ 3 Hr) . Thereafter, the resultant test specimen was subjected to torsional fatigue testing under a condition of the maximum shear stress $\tau$ = 427 N/mm$^2$ (pulsating), followed by counting the number (times) of torsion repetitions to failure and the fracture surface observation of the fracture initiation by means of an electron microscope.

The results of the torsional fatigue testing are listed in Table 3. The criteria of decision to pass or fail at this time were whether the number of torsion repetitions was 300,000 times or more and the failure should occur from the outer surface as initiation, and when the result meets the criteria, the evaluation result was indicated by o and when not, by x.

[Table 3]

Table 3

| Sample | Wrinkle depth after diameter reduction processing (mm) | Number of torsion repetition (times) | Failure position | Evaluation | Remarks |
|---|---|---|---|---|---|
| A | 0.12 | 332876 | External side initiation | ○ | Inventive Example |

(continued)

| Sample | Wrinkle depth after diameter reduction processing (mm) | Number of torsion repetition (times) | Failure position | Evaluation | Remarks |
|---|---|---|---|---|---|
| B | 0.16 | 329585 | External side initiation | ○ | Inventive Example |
| C | *0.30 | 287394 | Initiated from inner surface wrinkle portion | × | Comparative Example |
| D | *0.27 | 313274 | Initiated from inner surface wrinkle portion | × | Comparative Example |
| E | *0.36 | 253734 | Initiated from inner surface wrinkle portion | × | Comparative Example |
| F | *0.24 | 323789 | Initiated from inner surface wrinkle portion | × | Comparative Example |
| G | *0.34 | 265739 | Initiated from inner surface wrinkle portion | × | Comparative Example |
| H | 0.04 | 328794 | External side initiation | ○ | Inventive Example |
| I | 0.07 | 335408 | External side initiation | ○ | Inventive Example |

Note: • The maximum shearing stress $\tau$ was set at 427 N/mm$^2$ (pulsating).
• The mark * in the table indicates that the value deviates from the range specified in the present invention.

The results indicated in Table 3 show that, in the case where the inner surface wrinkle after diameter reduction processing of the inner diameter exceeds 0.20 mm (Samples C to G), fatigue fracture is generated from an inner surface wrinkle as initiation, and the presence of the inner surface wrinkle becomes obstacles for torsional fatigue characteristics after diameter reduction processing.

On the other hand, when the depth of the inner surface wrinkle after diameter reduction processing is controlled to be 0.20 mm or less (Samples A, B, H and I), fracture initiates at the spline-machined portion in the outer surface. The number of torsion repetitions to failure exceeded 300,000 times. These results made it possible to ascertain that the permissible depth of the wrinkle in the inner surface in the diameter reduced portion is 0.20 mm for the torsional fatigue in the inner diameter reduced portion of an integrally-formed type drive shaft.

INDUSTRIAL APPLICABILITY

A method of producing a cold-finished seamless steel tube for an integrally-formed type drive shaft of the present invention can be produced by applying cold drawing to a mother tube made by hot rolling by means of the Mannesmann tube-making method to thereby suppress the depth of a wrinkle remaining in the inside surface of tube, can secure torsional fatigue characteristics excellent also as an integrally-formed type automotive drive shaft having diameter reduced portions at opposite end portions, and can be used as a hollow member optimal in attaining lightness and quietness. Therefore, the application of the production method of the present invention enables an automotive drive shaft to be manufactured at inexpensive costs and efficiently, and thus the production method can be industrially effectively and widely applied.

**Claims**

1.    A method of producing a cold-finished seamless steel tube for an integrally-formed type drive shaft using a billet (1) in which its chemical composition comprises, by mass %, C: 0.30 to 0.38%, Si: 0.50% or less, Mn: 0.30 to 2.00%, P: 0.025% or less, S: 0.005% or less, Cr: 0.15 to 1.0%, Al: 0.001 to 0.05%, Ti: 0.005 to 0.05%, N: 0.02% or less, B: 0.0005 to 0.01%, and O (oxygen) : 0.0050% or less, the balance being Fe and impurities, and Beff defined by (1a) and (1b) above satisfies 0.0001% or more, given that Ti, N, and B are represented in terms of content (%), when N - 14 $\times$ Ti/47.9 $\geq$ 0,

$$\texttt{Beff = B - 10.8 \times (N - 14 \times Ti/47.9)/14 ... (1a),}$$

similarly, when N - 14 $\times$ Ti/47.9 < 0,

$$\texttt{Beff = B ... (1b),}$$

wherein:

(1) the billet (1) is subjected to piercing rolling by the Mannesmann tube-making method followed by elongation rolling;
(2) after then, when being subjected to sizing rolling by use of a sizing rolling mill including a plurality of roll-stands each having at least two grooved rolling rolls (6ra, 6rb), given that there is an angle $\beta$ (degrees) which is formed by tangent lines (La, Lb) drawn at adjacent roll edges (Ea, Eb) oppositely-disposed to each other in each roll-stand and a minimum angle in terms of angle $\beta$ (degrees) is determined and expressed by $\beta$min (degrees), mother tubes (2) are rolled and produced using the grooved rolling rolls that satisfy the relation of the equation (2),

$$\texttt{βmin ≥ 1.13 × 10 × ln(t/D × 100) + 1.37 × 10}^2 \texttt{ ...(2),}$$

where D is the outer diameter of the tube after sizing-rolling (mm), t is the wall thickness after sizing-rolling (mm) and ln(x) is the natural logarithm of x; and
(3) when said mother tubes (2) are cold drawn, a thickness reduction rate in the minimum thickness portion is 10% or more.

**2.** The method of producing a cold-finished seamless steel tube for an integrally-formed type drive shaft according to claim 1, **characterized in that** the chemical composition of the billet further comprises one or more elements out of one or more groups selected from groups of (a) to (c) below, in place of a part of Fe:

(a) one or more elements selected from Cu: 1% or less, Ni: 1% or less and Mo: 1% or less,
(b) one or more elements selected from V: 0.1% or less, Nb: 0.1% or less and Zr: 0.1% or less, and
(c) one or more elements selected from Ca: 0.01% or less, Mg: 0.01% or less, and rare earth metals (REM): 0.01% or less.

**3.** The method of producing a cold-finished seamless steel tube for an integrally-formed type drive shaft according to claim 1 or 2, **characterized in that** annealing or normalizing is carried out after cold drawing.

**Patentansprüche**

**1.** Verfahren zur Herstellung eines kalt bearbeiteten nahtlosen Stahlrohres für eine integral geformte Art von Antriebswelle unter Verwendung eines Blocks (1), wobei dessen chemische Zusammensetzung, in Masse-%, C: 0,30 bis 0,38 %, Si: 0,50 % oder weniger, Mn: 0,30 bis 2,00 %, P: 0,025 % oder weniger, S: 0,005 % oder weniger, Cr: 0,15 bis 1,0 %, Al: 0,001 bis 0,05 %, Ti: 0,005 bis 0,05 %, N: 0,02 % oder weniger, B: 0,0005 bis 0,01 % und O (Sauerstoff): 0,0050 % oder weniger umfasst, wobei der Rest Fe und Verunreinigungen sind und Beff, definiert durch obiges (1a) und (1b), 0,0001% oder mehr einhält, vorausgesetzt dass Ti, N und B, den Gehalt (%) angeben, wenn N - 14 x Ti /47.9 $\geq$ 0,

$$\text{Beff} = \text{B} - 10{,}8 \text{ x } (\text{N} - 14 \text{ x Ti }/47.9) /14 \dots \ (1a),$$

ebenso, wenn N - 14 x Ti /47.9 < 0,

$$\text{Beff} = \text{B} \dots \ (1b),$$

wobei:

(1) der Block (1) Lochwalzen bei dem Mannesmann-Rohrfertigungsverfahren, gefolgt von Streckwalzen, unterzogen wird;

(2) danach, wenn dieser Dimensionierungswalzen mittels eines Dimensionierungswalzwerkes, das eine Vielzahl an Walzständen umfasst, die jeweils mindestens zwei gekerbte Walzrollen (6ra, 6rb) haben, unterzogen wird, mit der Definition, dass es einen Winkel $\beta$ (Grad) gibt, der durch Tangentenlinien (La, Lb), die an benachbarten in jedem Walzstand zueinander entgegengesetzt angeordneten Walzkanten (Ea, Eb) gezogen sind, gebildet ist, und dass ein minimaler Winkel in Bezug auf Winkel $\beta$ (Grad) bestimmt wird und durch $\beta$min (Grad) ausgedrückt wird, Mutterrohre (2) unter Verwendung der gekerbten Walzrollen, die die Beziehung der Gleichung (2) erfüllen, gewalzt und gefertigt werden,

$$\beta\text{min} \geq 1{,}13 \text{ x } 10 \text{ x } \ln(\text{t/D x } 100) + 1{,}37 \text{ x } 10^2 \dots \ (2),$$

wobei D der äußere Durchmesser des Rohres nach dem Dimensionierungsrollen (mm) ist, t die Wandstärke nach dem Dimensionierungsrollen (mm) ist und ln (x) der natürliche Logarithmus von x ist; und

(3) wenn die Mutterrohre (2) kaltgezogen werden, eine Dicken-Reduktionsrate in dem Abschnitt minimaler Dicke 10 % oder mehr beträgt.

**2.** Verfahren zur Herstellung eines kalt bearbeiteten nahtlosen Stahlrohres für eine integral geformte Art von Antriebswelle nach Anspruch 1, **dadurch gekennzeichnet dass** die chemische Zusammensetzung des Blocks ferner eines oder mehrere Elemente einer oder mehrerer Gruppen, die aus den nachstehenden Gruppen (a) bis (c) ausgewählt sind, anstatt eines Teils des Fe umfasst:

(a) eines oder mehrere Elemente, ausgewählt aus: Cu: 1% oder weniger, Ni: 1 % oder weniger und Mo: 1 % oder weniger,

(b) eines oder mehrere Elemente, ausgewählt aus: V: 0,1 % oder weniger, Nb: 0,1 % oder weniger und Zr: 0,1 % oder weniger, und

(c) eines oder mehrere Elemente, ausgewählt aus: Ca: 0,01 % oder weniger, Mg: 0,01 % oder weniger und Seltenerdmetalle (REM): 0,01 % oder weniger.

**3.** Verfahren zur Herstellung eines kalt bearbeiteten nahtlosen Stahlrohres für eine integral geformte Art von Antriebswelle nach Anspruch 1 oder 2, **dadurch gekennzeichnet, dass** ein Anlass- oder Normalisiervorgang nach dem Kaltziehen durchgeführt wird.

**Revendications**

**1.** Procédé pour produire un tuyau en acier sans soudure fini à froid pour un arbre de transmission de type formé d'un seul tenant à l'aide d'une billette (1) dans lequel sa composition chimique comprend, en % en poids, C : 0,30 à 0,38 %, Si : 0,50 % ou moins, Mn : 0,30 à 2,00 %, P : 0,025 % ou moins, S : 0,005 % ou moins, Cr : 0,15 à 1,0 %, Al : 0,001 à 0,05 %, Ti : 0,005 à 0,5 %, N : 0,02 % ou moins, B : 0,0005 à 0,01 % et 0 (oxygène) : 0,0050 % ou moins, le reste étant constitué de Fe et d'impuretés, et Beff défini par (1a) et (1b) ci-dessous satisfait 0,0001 % ou plus, étant donné que Ti, N et B sont représentés en termes de teneur (%),

lorsque N - 14 x Ti/47,9 $\geq$ 0,

```
Beff = B - 10,8 x (N - 14 x Ti/47,9)/14 ... (1a)
```

de manière similaire, lorsque N - 14 x Ti/47,9 < 0,

$$\texttt{Beff = B ...  (1b),}$$

dans lequel :

(1) la billette (1) est soumise au perçage, laminage par le procédé de fabrication de tuyau de Mannesmann, suivis par le laminage d'allongement ;

(2) ensuite, lorsqu'elle est soumise au laminage de dimensionnement à l'aide d'un laminoir de dimensionnement comprenant une pluralité de cages de laminage ayant chacune au moins deux cylindres de laminage rainurés (6ra, 6rb), étant donné qu'il y a un angle β (degrés) qui est formé par des lignes tangentes (La, Lb) tracées au niveau des bords de cylindre (Ea, Eb) adjacents disposés à l'opposé l'un de l'autre dans chaque cage de laminage et qu'un angle minimum en termes d'angle β (degrés) est déterminé et exprimé par βmin (degrés), des tuyaux mères (2) sont laminés et produits à l'aide des cylindres de laminage rainurés qui satisfont la relation de l'équation (2),

$$\texttt{βmin ≥ 1,13 x 10 x ln(t/D x 100) + 1,37 x 10² ...(2),}$$

où D est le diamètre externe du tuyau après le laminage de dimensionnement (mm), t est l'épaisseur de paroi après le laminage de dimensionnement (mm) et ln(x) est le logarithme naturel de x ; et

(3) lorsque lesdits tuyaux mères (2) sont étirés à froid, un taux de réduction d'épaisseur dans la partie d'épaisseur minimum est de 10 % ou plus.

2.  Procédé pour produire un tuyau en acier sans soudure fini à froid pour un arbre de transmission du type formé d'un seul tenant selon la revendication 1, **caractérisé en ce que** la composition chimique de la billette comprend en outre un ou plusieurs éléments sur un ou plusieurs groupes choisis parmi les groupes de (a) à (c) ci-dessous, à la place d'une partie de Fe :

(a) un ou plusieurs éléments choisis parmi Cu : 1 % ou moins, Ni : 1 % ou moins et Mo : 1 % ou moins,

(b) un ou plusieurs éléments choisis parmi V : 0,1 % ou moins, Nb : 0,1 % ou moins et Zr : 0,1 % ou moins, et

(c) un ou plusieurs éléments choisis parmi Ca : 0,01 % ou moins, Mg : 0,01 % ou moins et métaux de terre rare (REM) : 0,01 % ou moins.

3.  Procédé pour produire un tuyau en acier sans soudure fini à froid pour un arbre de transmission du type formé d'un seul tenant selon la revendication 1 ou 2, **caractérisé en ce que** le recuit ou la normalisation est réalisé(e) après l'étirage à froid.

Fig. 1

Fig. 2

Fig. 3

Fig. 4

Fig. 5

Fig. 6

**Fig. 7**

(a)

(b)

(c)

**Fig. 8**

**EP 2 140 950 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1595609 A
- EP 1743950 A
- EP 1731234 A
- JP 2822849 B
- JP 2002356742 A
- WO 2007111258 A